# EUROPÄISCHE PATENTSCHRIFT

(11) **EP 2 522 847 B1**
(45) Veröffentlichungstag und Bekanntmachung des Hinweises auf die Patenterteilung: **08.04.2015**
(21) Anmeldenummer: 12002904.6
(22) Anmeldetag: 26.04.2012
(51) Int. Cl.: F03D 7/04, F03B 13/26, F03B 13/10, F03B 17/06

(54) **Strömungskraftwerkspark und Verfahren für dessen Erstellung**
Flow power plant park and method for its production
Parque de centrales d'énergie hydraulique et son procédé de fabrication

(30) Priorität: 12.05.2011 DE 102011101365
(43) Veröffentlichungstag der Anmeldung: 14.11.2012
(73) Patentinhaber: Voith Patent GmbH, 89522 Heidenheim (DE)
(72) Erfinder: Arlitt, Raphael, 89077 Ulm (DE); Perner, Norman, 89233 Neu-Ulm (DE); Biskup, Frank, 73527 Schwäbisch Gmünd (DE)
(74) Vertreter: Dr. Weitzel & Partner

(56) Entgegenhaltungen:
- CA-A1- 2 647 773
- DE-A1-102009 005 556
- DE-B3-102009 011 784

## Beschreibung

Die Erfindung betrifft einen Strömungskraftwerkspark mit Strömungskraftwerken gemäß des Oberbegriffs von Anspruch 1 sowie ein Verfahren für dessen Erstellung.

Strömungskraftwerke in Form freistehender Einheiten mit rotorförmigen Wasserturbinen zur Energiegewinnung aus einem Fließgewässer oder einer Meeresströmung, insbesondere einer Gezeitenströmung, sind bekannt, siehe zum Beispiel DE 10 2009 011 784 und DE 10 2009 005 556. Dabei erschließt eine Anordnung ohne Dammstrukturen vielzählige Installationsorte, insbesondere im küstennahen Bereich, für die Sperrwerke nicht rentabel erstellt werden können. Des Weiteren sind die typischerweise vollständig tauchenden Anlagen für die Schifffahrt kein Hindernis und sie stellen aufgrund der geringen Rotationsgeschwindigkeit der rotorförmigen Wasserturbinen keine Gefahr für den Fischbestand dar. Nachteilig am Anlagenkonzept freistehender Strömungskraftwerke ist die Notwendigkeit, jede einzelne Anlage für selten auftretende Belastungsspitzen auslegen zu müssen, da nicht die für Sperrwerke bestehende Möglichkeit genutzt werden kann, einzelne Wasserturbinen durch eine Blockade der Wasserführung aus der Strömung zu nehmen.

Eine Möglichkeit zur Abregelung gattungsgemäßer Anlagen besteht darin, die Rotorblätter der Wasserturbine drehbar an einem Nabenbauteil zu befestigen. Zur Lastreduktion im Fall einer Starkanströmung können die Rotorblätter dann in die Fahnenstellung gedreht werden. Allerdings führt dieser Ansatz zu einer konstruktiv aufwendigen Rotorblattanbindung. Dabei ist zu berücksichtigen, dass die für die Rotorblattnachstellung notwendigen Aktoren und Lagerungskomponenten ausfallsicher ausgelegt sein müssen, da im Fall einer Blattfalschstellung die Gefahr eines Rotorblattverlusts besteht. Des Weiteren stellt eine drehbare Rotorblattbefestigung insbesondere für einen Standort im Meer im Hinblick auf die Korrosionsproblematik und maritimen Bewuchs eine wartungsintensive Komponente dar, sodass vielfach der konstruktiv einfache Ansatz einer drehstarren Befestigung der Rotorblätter an einem Nabenelement bevorzugt wird.

Zur sicheren Anlagenauslegung sind neben den Zyklen der antreibenden Strömung zusätzlich die zu erwartenden meteorologischen Bedingungen zu berücksichtigen. Im Falle einer Gezeitenströmung kann die durch Ebbe und Flut bedingte Anströmung durch Wind und Wellenbewegungen beeinflusst werden. Dies betrifft insbesondere oberflächennahe Bereiche. Ferner ist das Relief des Gewässergrunds zu berücksichtigen, wobei je nach Strömungs- und Witterungsbedingungen mit Belastungsspitzen zu rechnen ist.

Werden mehrere Strömungskraftwerke zu einem Strömungskraftwerkspark zusammengefasst, ist es aus ökonomischen Gründen vorteilhaft, baugleiche Anlagen zu verwenden. Dies vereinfacht die Herstellung und Installation der Strömungskraftwerke. Des Weiteren können die Netzanbindung und die Wartung der Anlagen standardisiert und mit einheitlichen Schiffsfahrzeugen zum Bergen ausgeführt werden. Innerhalb eines Strömungskraftwerksparks variieren die Anströmungsverhältnisse in Abhängigkeit des jeweiligen Anlagenstandorts, sodass die einheitlichen Anlagen an die im Park insgesamt theoretisch zu erwartende Maximallast angepasst werden. Die meisten Anlagen eines Strömungskraftwerksparks sind als Folge mit einer überdimensionierten Sicherheitsreserve ausgelegt, sodass konstruktiv aufwendige Strömungskraftwerke mit einem verringerten Wirkungsgrad resultieren.

Der Erfindung liegt die Aufgabe zugrunde, die voranstehend genannten Nachteile von Strömungskraftwerksparks, insbesondere Gezeitenkraftwerksparks, zu überwinden. Unter einem Strömungskraftwerkspark wird eine räumliche Gruppierung von Strömungskraftwerken verstanden, die typischerweise über eine gemeinsame Netzaufschaltung und/oder Landverbindung in Form eines Seekabels verfügen. Dabei soll ein Strömungskraftwerkspark angegeben werden, dessen Strömungskraftwerke konstruktiv einfach ausgebildet sind und die standortspezifische Strömung im Jahresmittel effizient ausnutzen. Des Weiteren sollen die einzelnen Anlagen des Strömungskraftwerksparks mit einer an den jeweiligen Anlagenstandort angepassten Sicherheitsreserve ausgelegt sein. Ferner ist ein Verfahren zur Erstellung eines Strömungskraftwerksparks anzugeben, wobei die einzelnen Strömungskraftwerke des Parks gleich belastet werden, sodass sich die Standzeiten und Wartungsintervalle angleichen.

Die voranstehend genannte Aufgabe wird durch die Merkmale der unabhängigen Ansprüche gelöst. Dabei haben die Erfinder erkannt, dass für einen Strömungskraftwerkspark eine standortspezifische Anpassung der einzelnen Strömungskraftwerke auf der Grundlage einheitlicher Antriebsstränge und standortspezifisch ausgewählter rotorförmiger Wasserturbinen erfolgen sollte. Damit erhält jedes einzelne Strömungskraftwerk des Parks eine auf die jeweils zu erwartenden Strömungsverhältnisse und den ausgewählten einheitlichen Antriebsstrang angepasste rotorförmige Wasserturbine. Die an den einzelnen Anlagenstandorten zu erwartende Anströmung wird entweder vermessen oder modellbasiert abgeschätzt.

Der standardisierte Antriebstrang stellt eine Verbindung zwischen der rotorförmigen Wasserturbine und einem elektrischen Generator her und stützt zugleich mittels zugeordneter Lagerungskomponenten eine rotorförmige Wasserturbine ab, die bevorzugt als Horizontalläuferturbine ausgebildet ist. Hierzu sind radial und axial wirkende Lagerungskomponenten oder kombinierte Lager am Antriebsstrang für die umlaufende Einheit, die typischerweise neben der rotorförmigen Wasserturbine eine Antriebswelle umfasst, vorgesehen.

Mit der Auswahl eines Antriebsstrangs, insbesondere der Dimensionierung der zugeordneten Lagerungskomponenten, resultiert eine Vorgabe für eine maximale Schublast in Axialrichtung und damit längs zu einer der rotorförmigen Wasserturbine zugeordneten Rotationsachse. Des Weiteren ist ein maximales Kippmoment um eine senkrecht zur Rotationsachse stehende Querachse durch die Wahl des Antriebsstrangs vorgegeben.

Ausgehend von einem einheitlichen Antriebsstrang für die Strömungskraftwerke des Strömungskraftwerksparks werden die rotorförmigen Wasserturbinen der einzelnen Strömungskraftwerke an den jeweiligen Anlagenstandort angepasst. Demnach liegen für einen erfindungsgemäßen Strömungskraftwerkspark wenigstens zwei Strömungskraftwerke in einer räumlichen Gruppierung mehrerer Anlagen vor, die unterschiedlich dimensionierte rotorförmige Wasserturbinen und gleiche Antriebsstränge aufweisen. Dabei erfolgt die standortspezifische Anpassung der rotorförmigen Wasserturbine durch die Wahl unterschiedlicher Rotordurchmesser und/oder einer Variation der Rotorblattprofile, etwa durch die Einstellung der Tiefenverteilung des Profils und/oder des Verwindungsverlaufs der Rotorblätter. Für eine Ausführungsvariante wird alternativ oder zusätzlich zur standortspezifischen Anpassung die Rotorblattelastizität bezüglich einer Torsion und/oder Blattdurchbiegung in Strömungsrichtung angepasst, sodass unter Höchstlastbedingungen die Rotorelastizität zu Verringerung der Rotorlasten verwendet wird. Die so erzielte Lastabregelung wird an einem Anlagenstandort mit einer geringeren zu erwartenden Höchstbelastung gegenüber einem Standort mit höheren Belastungsspitzen schwächer ausgelegt, um die Gesamteffizienz der jeweiligen Anlage zu verbessern.

Die für die Einzelanlagen ausgeführte standortspezifische Wahl der Rotorcharakteristik unter Berücksichtigung einheitlicher Antriebsstränge vereinfacht einen lastbeschränkten Anlagenbetrieb. Dabei wird oberhalb einer vorgegebenen Lastschwelle, die durch die Wahl des Antriebsstrangs bestimmt wird, eine Anlagenabregelung durch eine Führung der rotorförmigen Wasserturbine in den Schnelllaufbereich bewirkt. Hierzu wird das durch den elektrischen Generator auf den Antriebsstrang wirkende Bremsmoment so weit reduziert, dass die rotorförmige Wasserturbine mit einer Schnelllaufzahl oberhalb der leistungsoptimalen Schnelllaufzahl oder einer für die Leistungsabregelung erforderlichen Schnelllaufzahl mit einer lastbegrenzten Schnelllaufzahl betrieben wird. Dabei kann die rotorförmige Wasserturbine im Limit bis zur Durchgangsdrehzahl geführt werden. Entsprechend wird bevorzugt die standortspezifische Rotorauslegung durch die Vorgabe einer Durchgangsschnelllaufzahl ausgeführt.

Durch die Wahl baugleicher Antriebsstränge zur Erstellung eines Strömungskraftwerksparks in Verbindung mit einer standortspezifischen Anpassung der rotorförmigen Wasserturbine resultieren übereinstimmende Lastgrenzen, für die an den Antriebsstrang, insbesondere dessen Lagerungskomponenten, anschließende lastaufnehmende Strukturen. Dies führt zu einem einheitlichen Gondelgehäuse, das den standardisierten Antriebsstrang mit dem daran angeschlossenen elektrischen Generator umschließt. Dabei werden bevorzugt für die elektrischen Maschinenkomponenten, insbesondere den elektrischen Generator, sowie die zur Netzaufschaltung verwendeten Frequenzumrichter für alle Anlagen des Strömungskraftwerksparks baugleiche Komponenten verwendet. Für zweiteilige Anlagen, für die das Gondelgehäuse auf eine Tragstruktur, mit der sich die Anlage gegen den Gewässergrund abstützt, aufsetzbar ist, schließt sich bevorzugt an das Gondelgehäuse ein standardisierter Turmadapter an.

Des Weiteren wird neben der Anpassung der Rotorcharakteristik die Tauchtiefe der Anlagen ausgewählt. Werden den Rotorkreisen der rotorförmigen Wasserturbinen Scheitelpunkte zugeordnet, so liegen diese gemäß einer bevorzugten Ausführungsvariante bei der gleichen mittleren Tauchtiefe, die beispielsweise durch die Erfordernisse des Schiffsverkehrs vorgegeben wird. Infolge einer standortspezifischen Anpassung der Dimensionierung der rotorförmigen Wasserturbine werden die Strömungskraftwerke innerhalb des Strömungskraftwerkparks Rotationsachsen aufweisen, die auf unterschiedlichen Tauchtiefen liegen. Hierdurch wird die Höhe der Tragstruktur über dem Gewässergrund festgelegt, sodass für eine vorteilhafte Weitergestaltung das Fundament am Gewässergrund standortspezifisch anpassbar ist. Dies betrifft insbesondere Anlagenausführungen mit einem Schwerkraftfundament.

Die standortspezifische Anpassung der rotorförmigen Wasserturbine für jedes einzelne Strömungskraftwerk eines Parks ausgehend von baugleichen Antriebssträngen kann für unterschiedliche Anlagentypen verwendet werden. Besonders bevorzugt werden solchermaßen ausgeführte Horizontalläuferturbinen mit drehstarr angelenkten Rotorblättern. Im Fall von Gezeitenkraftwerken können die Profile der Rotorblätter symmetrisch angelegt sein, um einen bidirektionalen Anlagenbetrieb zu ermöglichen. Alternativ erfolgt die Anlagennachführung als Reaktion auf einen Strömungsrichtungswechsel durch einen AzimutDrehmechanismus zur Nachführung der rotorförmigen Wasserturbine. Ferner ist es denkbar, zur Ausführung der Erfindung eine Anlage mit drehbar an einem Nabenteil befestigten Rotorblättern zu verwenden. Im Fall von Gezeitenkraftwerken sind bei einer solchen Ausführung Rotorblätter vorteilhaft, die sich um mindestens 180° drehen lassen. Des Weiteren kann die rotorförmige Wasserturbine von einem Strömungsgehäuse umschlossen sein, das zur Strömungsbeschleunigung als Venturigehäuse ausgebildet ist.

Nachfolgend wird die Erfindung anhand Ausführungsbeispielen und Figurendarstellungen genauer erläutert, in denen im Einzelnen Folgendes dargestellt ist:
- Figur 1: zeigt exemplarisch zwei Strömungskraftwerke eines erfindungsgemäßen Strömungskraftwerksparks in teilangeschnittener Seitenansicht.
- Figur 2: zeigt eine Ausgestaltungsalternative für einen erfindungsgemäßen Strömungskraftwerkspark.
- Figur 3: zeigt den lastbegrenzten Anlagenbetrieb für einen erfindungsgemäßen Strömungskraftwerkspark.

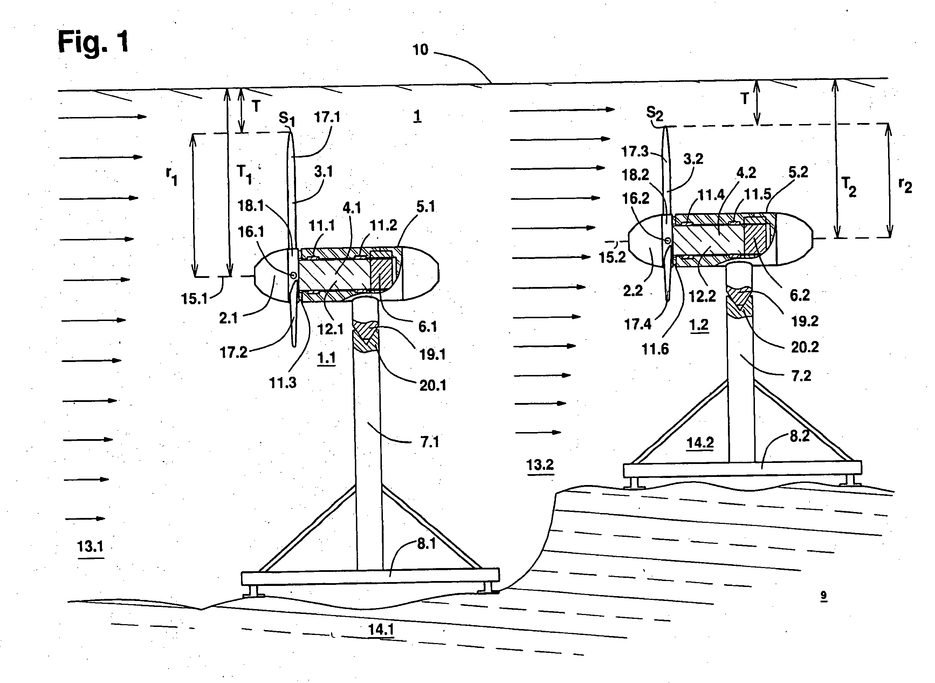

Figur 1 stellt für einen Strömungskraftwerkspark 1 exemplarisch zwei Strömungskraftwerke 1.1, 1.2 an einem ersten Anlagenstandort 14.1, dem ein erstes Strömungsfeld 13.1 zugeordnet ist, und an einem zweiten Anlagenstandort 14.2 mit einem zweiten Strömungsfeld 13.2, das vom ersten Strömungsfeld 13.1 abweicht, dar. Ausgangspunkt der Erstellung der Strömungskraftwerke 1.1, 1.2 ist ein für beide Anlagen einheitlicher Antriebsstrang 4.1, 4.2. Dieser umfasst Lagerungskomponenten 11.1 - 11.6 zur axialen und radialen Abstützung einer umlaufenden Einheit 2.1, 2.2. Dabei umfasst die umlaufende Einheit 2.1, 2.2 eine Antriebswelle 12.1, 12.2, die eine Verbindung zwischen einer rotorseitigen Nabe 18.1, 18.2 und dem elektrischen Generator 6.1, 6.2 herstellt. Vorliegend erfolgt eine direkte Ankopplung mit einer drehstarren Verbindung.

Am ersten Anlagenstandort 14.1 liegt ein schwächeres erstes Strömungsfeld 13.1 vor. Entsprechend ist die erste rotorförmige Wasserturbine 3.1 des Strömungskraftwerks 1.1 standortspezifisch angepasst und weist einen ersten Rotorradius r₁ auf, der größer ist als der zweite Rotorradius r₂ der zweiten rotorförmigen Wasserturbine 3.2 für das Strömungskraftwerk 1.2 am zweiten Anlagenstandort 14.2.

Der standardisierte Antriebsstrang 4.1, 4.2 führt zu einer Vorgabe für die maximale Schublast längs zur Rotationsachse 15.1, 15.2 der umlaufenden Einheit 2.1, 2.2. Eine weitere Vorgabe ergibt sich für das maximale Kippmoment um eine Querachse 16.1, 16.2, die senkrecht zur Rotationsachse 15.1, 15.2 und senkrecht zur Vertikalrichtung steht. Um die Querachse 16.1, 16.2 ergibt sich ein Kippmoment aufgrund des Profils der auf die Wasserturbinen 3.1, 3.2 wirkenden Strömungsfelder 13.1, 13.2. Aus den Vorgaben für die maximale Schublast und für das maximale Kippmoment folgt dann die standortspezifische Anpassung der ersten rotorförmigen Wasserturbine 3.1 und der zweiten rotorförmigen Wasserturbine 3.2.

Eine Vereinheitlichung des Antriebsstrangs 4.1, 4.2 ermöglicht die Verwendung für baugleicher Maschinengondeln 5.1, 5.2 sowie des gleichen elektrischen Generators 6.1, 6.2. Ferner ist für die dargestellte, bevorzugte Ausgestaltung der Turmadapter 19.1, 19.2, mit dem die Anlage auf eine komplementär geformte Kopplungsvorrichtung 20.1, 20.2 an der Tragstruktur 7.1, 7. 2 aufgesetzt ist, ebenfalls als Standardteil ausgebildet. Diese für alle Anlagen übereinstimmende Ausführung im Strömungskraftwerkspark 1 ergibt sich aus der durch die standortspezifische Anpassung der rotorförmigen Wasserturbinen 3.1, 3.2 resultierenden Angleichung bei einer Starkanströmung vorliegenden Schublasten und Kippmomente. Für das in Figur 1 dargestellte Ausführungsbeispiel liegen die Scheitelpunkte S₁, S₂ der Rotorkreise der ersten rotorförmigen Wasserturbine 3.1 und der zweiten rotorförmigen Wasserturbine 3.2 auf einer übereinstimmenden Tauchtiefe T. Diese ist so gewählt, dass die Anlagen vor einer Beschädigung durch Schifffahrzeuge sicher sind und zusätzlich die Wasserturbinen 3.1, 3.2 hinreichend tief tauchen um Kavitationseffekte beim Betrieb zu vermeiden. Als Folge liegen die Rotationsachsen 15.1, 15.2 der Strömungskraftwerke 1.1, 1.2 auf unterschiedlichen Tauchtiefen T₁ und T₂. Entsprechend wird die Tragstruktur 7.1, 7.2, die bis zu einem Fundament 8.1, 8.2 am Gewässergrund 9 reicht, abgestimmt. Ferner ist es denkbar, auch das Fundament 8.1, 8.2 selbst an den jeweiligen Anlagenstandort 14.1, 14.2 und die Höhe der Tragstruktur 7.1, 7.2 anzupassen.

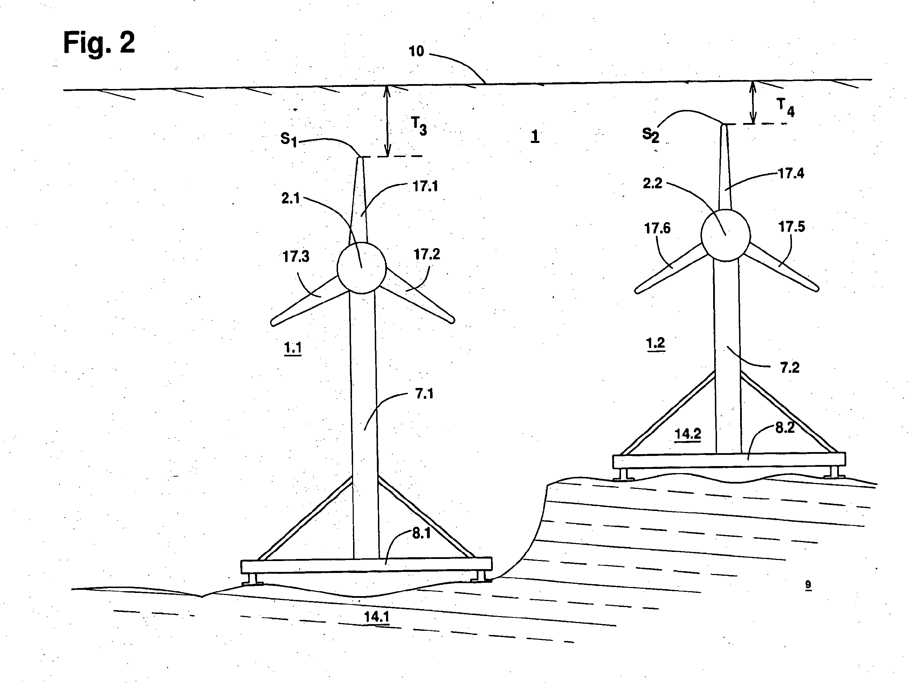

Figur 2 zeigt ein alternatives Ausführungsbeispiel eines erfindungsgemäßen. Gezeitenkraftwerksparks 1 mit den Gezeitenkraftwerken 1.1, 1.2. Dargestellt sind Anlagen, deren Scheitelpunkte S1, S2 der Rotorkreise auf unterschiedliche Tauchtiefen T₃, T₄ liegen. Es liegen einheitliche Antriebsstränge vor - diese sind im Einzelnen nicht dargestellt. Gezeigt sind die an die jeweiligen Anlagenstandorte 14.1, 14.2 angepassten, rotorförmigen Wasserturbinen 3.1, 3.2 deren Rotorblattprofile unterschiedlich gewählt sind, um die durch den Antriebsstrang vorgegebene Belastungsschwellen für die Schubbelastung und das Kippmoment einzuhalten.

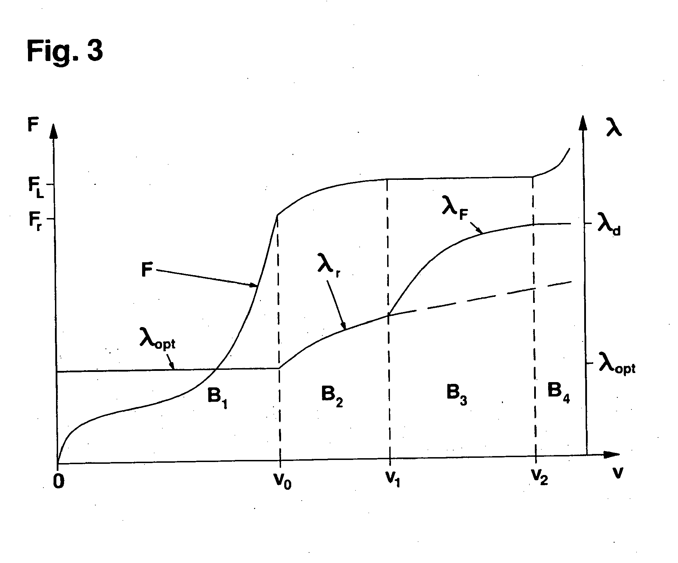

Figur 3 zeigt die Ausführung eines lastbegrenzten Betriebs, der die Grundlage zur Anpassung der rotorförmigen Wasserturbine an eine standortspezifische Anströmung und die Belastbarkeit eines standardisierten Antriebsstrangs bildet. Gezeigt ist die Schnelllaufzahl λ, die als Verhältnis zwischen Blattspitzengeschwindigkeit der rotorförmigen Wasserturbine und einer gemittelten Anströmungsgeschwindigkeit v festgelegt ist, wobei die Anströmungsgeschwindigkeit v aus einer Mittelung des Strömungsfelds über den Rotorkreis folgt. Ferner ist die Schubkraft F gegen die gemittelte Anströmungsgeschwindigkeit v dargestellt. Für gemittelte Anströmungsgeschwindigkeiten bis v₀ wird ein leistungsoptimaler Betrieb B₁ bei einer leistungsoptimalen Schnelllaufzahl λₒₚₜ ausgeführt. Erreicht die Schubkraft F die nominale Schubkraft Fᵣ geht die Anlage in den leistungsbegrenzten Betrieb B₂ über. Hierzu erfolgt eine Führung entlang der Kurve für die leistungsbegrenzte Schnelllaufzahl λᵣ. Damit steigt auch die Schubkraft F bis ein vorgegebener Schubkraft-Schwellwert F_{L} erreicht wird, ab dem der Übergang zum schubkraftbegrenzten Betrieb B₃ ausgeführt wird. Hierzu wird die rotorförmige Wasserturbine weiter beschleunigt und entlang der schubbegrenzten Schnelllaufzahl λ_{F} geführt. Dieser schubbegrenzte Betrieb B₃ wird im Bereich der gemittelten Anströmungsgeschwindigkeiten v₁ und v₂ ausgeführt. Beim Erreichen der Durchgangsdrehzahl, der die Schnelllaufzahl λ_{d} zugeordnet ist, erhöht sich bei einer zunehmenden gemittelten Anströmungsgeschwindigkeit v die Schublast F auf den Rotor. Daher muss die rotorförmige Wasserturbine so ausgelegt sein, dass dieser Bereich B₄ auch bei Höchstbelastung nicht erreicht wird. Entsprechende Auslegungskriterien ergeben sich für die im Einzelnen in Figur 3 nicht dargestellte Kipplast.

Weitere Ausgestaltungen im Rahmen der nachfolgenden Schutzansprüche sind denkbar. Dabei kann die standortspezifische Anpassung der rotorförmigen Wasserturbine auf der Grundlage eines standardisierten Antriebsstrangs neben Horizontalläuferturbinen auch für Anlagen mit einer vertikalen Drehachse angewandt werden.

### Bezugszeichenliste

- 1: Strömungskraftwerkspark
- 1.1: erstes Strömungskraftwerk
- 1.2: zweites Strömungskraftwerk
- 2.1, 2.2: umlaufende Einheit
- 3.1: erste rotorförmige Wasserturbine
- 3.2: zweite rotorförmige Wasserturbine
- 4.1: erster Antriebsstrang
- 4.2: zweiter Antriebsstrang
- 5.1, 5.2: Maschinengondel
- 6.1, 6.2: elektrischer Generator
- 7.1, 7.2: Tragstruktur
- 8.1, 8.2: Fundament
- 9: Gewässergrund
- 10: Wasseroberfläche
- 11.1, ..., 11.6: Lagerungskomponenten
- 12.1, 12.2: Antriebswelle
- 13.1: erstes Strömungsfeld
- 13.2: zweites Strömungsfeld
- 14.1: erster Anlagenstandort
- 14.2: zweiter Anlagenstandort
- 15.1, 15.2: Rotationsachse
- 16.1, 16.2: Querachse
- 17.1, 17.2, 17.3, 17.4: Rotorblatt
- 18.1, 18.2: Nabe
- 19.1, 19.2: Turmadapter
- 20.1, 20.2: Kopplungsvorrichtung
- r₁: erster Rotorradius
- r₂: zweiter Rotorradius
- S₁, S₂: Scheitelpunkt des Rotorkreises
- T, T₁, T₂, T₃, T₄: Tauchtiefe
- λ: Schnelllaufzahl
- λ_{d}: der Durchgangsdrehzahl zugeordnete Schnelllaufzahl
- λₒₚₜ: leistungsoptimale Schnelllaufzahl
- λᵣ: leistungsbegrenzte Schnelllaufzahl
- λ_{F}: schubbegrenzte Schnelllaufzahl
- F: Schubkraft
- Fᵣ: nominale Schubkraft
- F_{L}: Schubkraft-Schwellwert
- v, v₀, v₁, v₂: gemittelte Anströmungsgeschwindigkeit
- vₙ: nominale Anströmungsgeschwindigkeit
- B₁: leistungsoptimaler Betrieb
- B₂: leistungsbegrenzter Betrieb
- B₃: schubbegrenzter Betrieb
- B₄: Betrieb bei der Durchgangsdrehzahl

## Patentansprüche

1. Strömungskraftwerkspark mit
mehreren Strömungskraftwerken (1.1, 1.2), die jeweils eine rotorförmige Wasserturbine (3.1, 3.2) und einen elektrischen Generator (6.1. 6.2) umfassen, welche mittels eines Antriebsstrangs (4.1, 4.2) verbunden sind, wobei der Antriebsstrang (4.1, 4.2) Lagerungskomponenten (11.1 - 11.6) zur Abstützung der rotorförmigen Wasserturbine (3.1, 3.2) umfasst;
**dadurch gekennzeichnet, dass**
wenigstens zwei der Strömungskraftwerke (1.1, 1.2) unterschiedlich dimensionierte rotorförmige Wasserturbinen (3.1, 3.2) und gleiche Antriebsstränge (4.1, 4.2) aufweisen.

2. Strömungskraftwerkspark nach Anspruch 1, wobei die unterschiedlich dimensionierten rotorförmigen Wasserturbinen (3.1, 3.2) voneinander abweichende Rotordurchmesser (r₁, r₂) aufweisen.

3. Strömungskraftwerk nach einem der Ansprüche 1 oder 2, wobei die unterschiedlich dimensionierten rotorförmigen Wasserturbinen (3.1, 3.2) voneinander abweichende Profilgestaltungen aufweisen.

4. Strömungskraftwerkspark nach einem der vorausgehenden Ansprüche, wobei die Strömungskraftwerke (1.1, 1.2) des Strömungskraftwerksparks gleiche elektrische Generatoren (6.1, 6.2) aufweisen.

5. Strömungskraftwerkspark nach einem der vorausgehenden Ansprüche, wobei den rotorförmigen Wasserturbinen (3.1, 3.2) Rotorkreise mit Scheitelpunkten (S₁, S₂) zugeordnet sind, wobei die Scheitelpunkte (S₁, S₂) auf der gleichen Tauchtiefe (T) liegen.

6. Strömungskraftwerkspark nach einem der vorausgehenden Ansprüche, wobei wenigstens zwei Strömungskraftwerke (1.1, 1.2) Rotationsachsen (15.1, 15.2) aufweisen, die auf unterschiedlichen Tauchtiefen (T₁, T₂) liegen.

7. Strömungskraftwerkspark nach einem der vorausgehenden Ansprüche, wobei die rotorförmigen Wasserturbinen (3.1, 3.2) der Strömungskraftwerke (1.1, 1.2) drehstarr an einer Nabe (18.1, 18.2) befestigte Rotorblätter (17.1 - 17.4) umfassen.

8. Verfahren zum Erstellung eines Strömungskraftwerksparks mit mehreren Strömungskraftwerken (1.1, 1.2), die jeweils eine rotorförmige Wasserturbine (3.1, 3.2) und einen elektrischen Generator (6.1. 6.2) umfassen, welche mittels eines Antriebsstrangs (4.1, 4.2) verbunden sind, wobei der Antriebsstrang (4.1, 4.2) Lagerungskomponenten (11.1 - 11.6) zur Abstützung der rotorförmigen Wasserturbine (3.1, 3.2) umfasst;
**dadurch gekennzeichnet, dass**
einheitliche Antriebsstränge (4.1, 4.2) für die Strömungskraftwerke (1.1, 1.2) ausgewählt werden und die rotorförmige Wasserturbine (3.1, 3.2) für jedes einzelne Strömungskraftwerk (3.1, 3.2) an den jeweiligen Anlagenstandort (15.1, 15.2) angepasst wird.

9. Verfahren nach Anspruch 8, wobei der Wasserturbine (3.1, 3.2) eine Rotationsachse (15.1, 15.2) zugeordnet ist und die Anpassung der rotorförmigen Wasserturbine (3.1, 3.2) anhand einer Vorgabe für eine maximale Schublast längs zur Rotationsachse (15.1, 15.2) erfolgt.

10. Verfahren nach einem der Ansprüche 8 oder 9, wobei der Wasserturbine (3.1, 3.2) eine Querachse (16.1, 16.2), die senkrecht zur Rotationsachse (15.1, 15.2) verläuft, zugeordnet ist und die Anpassung der rotorförmigen Wasserturbine (3.1, 3.2) anhand einer Vorgabe für ein maximales Kippmoment um die Querachse (16.1, 16.2) erfolgt.

11. Verfahren nach einem der Ansprüche 8 - 10, wobei die Anpassung der rotorförmigen Wasserturbine (3.1, 3.2) durch die Vorgabe einer Durchgangsschnelllaufzahl λ_{d} erfolgt.

## Claims

1. A maritime current power plant park, comprising several maritime current power plants (1.1, 1.2) which respectively comprise a rotor-like water turbine (3.1, 3.2) and an electric generator (6.1, 6.2) which are connected by means of a drive train (4.1, 4.2), with the drive train (4.1, 4.2) comprising bearing components (11.1 to 11.6) for supporting the rotor-like water turbine (3.1, 3.2), **characterized in that**
at least two of the maritime current power plants (1.1, 1.2) comprise differently dimensioned rotor-like water turbines (3.1, 3.2) and similar drive trains (4.1, 4.2).

2. A maritime current power plant park according to claim 1, wherein the differently dimensioned rotor-like water turbines (3.1, 3.2) have rotor diameters (r₁, r₂) which deviate from one another.

3. A maritime current power plant according to one of the claims 1 or 2, wherein the differently dimensioned rotor-like water turbines (3.1, 3.2) have profile configurations which deviate from one another.

4. A maritime current power plant park according to one of the preceding claims, wherein the maritime current power plants (1.1, 1.2) of the maritime current power plant park have the same electric generators (6.1 , 6.2).

5. A maritime current power plant park according to one of the preceding claims, wherein the rotor-like water turbines (3.1, 3.2) are associated with rotor circles with vertices (S₁, S₂), with the vertices (S₁, S₂) being disposed at the same immersion depth (T).

6. A maritime current power plant park according to one of the preceding claims, wherein at least two maritime current power plants (1.1, 1.2) have rotational axes (15.1, 15.2) which are disposed at different immersion depths (T₁, T₂).

7. A maritime current power plant park according to one of the preceding claims, wherein the rotor-like water turbines (3.1, 3.2) of the maritime current power plants (1.1, 1.2) comprise rotor blades (17.1 to 17.4) which are fixed in a torsion-proof manner to a hub (18.1, 18.2).

8. A method for producing a maritime current power plant park with several maritime current power plants (1.1, 1.2) which respectively comprise a rotor-like water turbine (3.1, 3.2) and an electric generator (6.1, 6.2) which are connected by means of a drive train (4.1, 4.2), with the drive train (4.1, 4.2) comprising bearing components (11.1 to 11.6) for supporting the rotor-like water turbine (3.1, 3.2), **characterized in that** uniform drive trains (4.1, 4.2) are chosen for the maritime current power plants (1.1, 1.2) and the rotor-like water turbine (3.1, 3.2) is adjusted to the respective unit location (15.1, 15.2) for every single maritime current power plant (3.1, 3.2).

9. A method according to claim 8, wherein the water turbine (3.1, 3.2) is associated with a rotational axis (15.1, 15.2) and the adjustment of the rotor-like water turbine (3.1, 3.2) is performed by means of a default value for a maximum thrust load along the rotational axis (15.1, 15.2).

10. A method according to one of the claims 8 or 9, wherein the water turbine (3.1, 3.2) is associated with a transverse axis (16.1, 16.2) which extends perpendicularly to the rotational axis (15.1, 15.2) and the adjustment of the rotor-like water turbine (3.1, 3.2) is made on the basis of a default value for a maximum tilting moment about the transverse axis (16.1, 16.2).

11. A method according to one of the claims 8 to 10, wherein the adjustment of the rotor-like water turbine (3.1, 3.2) is made by the default value of a runaway speed ratio I_{d}.

## Revendications

1. Parc de centrales marémotrices comportant
plusieurs centrales marémotrices (1.1, 1.2), comprenant respectivement une turbine à eau (3.1, 3.2) en forme de rotor et un générateur électrique (6.1. 6.2), qui sont reliés au moyen d'un train d'entraînement (4.1, 4.2), où le train d'entraînement (4.1, 4.2) comporte des composants de palier (11.1 - 11.6) pour supporter la turbine à eau (3.1, 3.2) en forme de rotor ;
**caractérisé en ce qu'**au moins deux des centrales marémotrices (1.1, 1.2) présentent des turbines à eau (3.1, 3.2) en forme de rotor et dimensionnées de manière différente et des trains d'entraînement identiques (4.1, 4.2).

2. Parc de centrales marémotrices selon la revendication 1, où les turbines à eau (3.1, 3.2) en forme de rotor et dimensionnées de manière différente présentent des diamètres de rotor (r₁, r₂) différents l'un de l'autre.

3. Centrale marémotrice selon l'une des revendications 1 ou 2, où les turbines à eau (3.1, 3.2) en forme de rotor et dimensionnées de manière différente présentent des conceptions de profil différentes l'une de l'autre.

4. Parc de centrales marémotrices selon l'une des revendications précédentes, où les centrales marémotrices (1.1, 1.2) du parc de centrales marémotrices présentent des générateurs électriques identiques (6.1, 6.2).

5. Parc de centrales marémotrices selon l'une des revendications précédentes, où des circuits de rotor aux sommets (S₁, S₂) sont affectés aux turbines à eau (3.1, 3.2) en forme de rotor, où les sommets (S₁, S₂) se trouvent à la même profondeur de pénétration (T).

6. Parc de centrales marémotrices selon l'une des revendications précédentes, où au moins deux centrales marémotrices (1.1, 1.2) présentent des axes de rotation (15.1, 15.2), reposant à des profondeurs de pénétration différentes (T₁, T₂).

7. Parc de centrales marémotrices selon l'une des revendications précédentes, où les turbines à eau en forme de rotor (3.1, 3.2) des centrales marémotrices (1.1, 1.2) comprennent des pales de rotor (17.1 - 17.4) fixées de manière solidaire au niveau d'un moyeu (18.1, 18.2).

8. Procédé de fabrication d'un parc de centrales marémotrices comprenant plusieurs centrales marémotrices (1.1, 1.2), comprenant respectivement une turbine à eau (3.1, 3.2) en forme de rotor et un générateur électrique (6.1. 6.2), qui sont reliés au moyen d'un train d'entraînement (4.1, 4.2), où le train d'entraînement (4.1, 4.2) comporte des composants de palier (11.1 - 11.6) pour supporter la turbine à eau (3.1, 3.2) en forme de rotor ;
**caractérisé en ce que**
des trains d'entraînement uniformes (4.1, 4.2) sont sélectionnés pour les centrales marémotrices (1.1, 1.2) et la turbine à eau en forme de rotor (3.1, 3.2) est adaptée au site d'installation respectif (15.1, 15.2) pour chaque centrale marémotrice individuelle (3.1, 3.2).

9. Procédé selon la revendication 8, où un axe de rotation (15.1, 15.2) est affecté à la turbine à eau (3.1, 3.2) et la turbine à eau en forme de rotor (3.1, 3.2) est adaptée à une charge de poussée maximale le long de l'axe de rotation (15.1, 15.2) selon une valeur prédéterminée.

10. Procédé selon l'une des revendications 8 ou 9, où un axe transversal (16.1, 16.2), perpendiculaire à l'axe de rotation (15.1, 15.2), est affecté à la turbine à eau (3.1, 3.2) et la turbine à eau en forme de rotor (3.1, 3.2) est adaptée à un couple de basculement maximal le long de l'axe transversal (16.1, 16.2) selon une valeur prédéterminée.

11. Procédé selon l'une quelconque des revendications 8 à 10, où la turbine à eau (3.1, 3.2) en forme de rotor est adapté à une vitesse spécifique de mise en marche automatique λj selon une valeur prédéterminée.
